# EUROPEAN PATENT SPECIFICATION

(11) **EP 2 130 719 B1**
(45) Date of publication and mention of the grant of the patent: **13.10.2010**
(21) Application number: 09161729.0
(22) Date of filing: 02.06.2009
(51) Int. Cl.: B60Q 1/14

(54) **Lever switch device**
Hebelschaltervorrichtung
Dispositif à commutateur à levier

(30) Priority: 03.06.2008 JP 2008145886
(43) Date of publication of application: 09.12.2009
(73) Proprietor: Kabushiki Kaisha Tokai Rika Denki Seisakusho, Ohguchi-cho Niwa-gun Aichi 480-0195 (JP)
(72) Inventor: Misaka, Keiji, Niwa-gun Aichi 480-0195 (JP)
(74) Representative: Gill, David Alan

(56) References cited:
- EP-A- 0 577 500
- FR-A- 2 765 387
- FR-A- 2 823 820
- FR-A- 2 870 634
- JP-A- 4 169 020
- JP-A- 2002 367 483

## Description

The present invention relates to a lever switch device, in more particular, to a lever switch device applied to a vehicle such as an automobile, etc.

An example of a lever switch device applied to a vehicle such as an automobile, etc. is configured to provide two operating knobs at a tip end portion of a lever which operates a turn signal switch. In the case of this configuration, the lever is rotatably provided on a body and, at the same time, two remote shafts operated by the two operating knobs are incorporated in the lever in a rotatable state. In addition, switches corresponding to the two operating knobs provided on the body are configured to carry out a switching operation by a rotation of the tip portions of the remote shafts according to a rotational operation of the operating knobs (e.g., JP-A 11-250772).

According to this lever switch device, since two rotationally operable operating knobs are provided in the lever, it is possible to simplify a structure in the lever and thereby realizing a lever switch for a vehicle having an operating lever with a slimmed shape. However, according to the lever switch device of JP-A 11-250772. since it is necessary to insert two remote shafts from a tip end portion of a lever in order to incorporate two remote shafts therein, there is a problem in that an attachment property is not good.

JP 4169020 discloses a switching mechanism for a rotationally moving switch in which, by rotationally moving an operating knob to a plurality of positions, an operating lever can be rotationally moved to slide and displace rotationally moving elements along a straight line. The moving elements are provided with connection ports to freely insert and extract operating protrusions formed on the operating lever therein and therefrom. When the operating knob is rotationally moved, either one of two moving elements can be moved to each of the plurality of positions.

JP 2002 367483 discloses a lever switching device comprising a hollow lever, having a shape bent in an intermediate part and an operation knob attached rotatably to a tip part of the lever. The lever switch device is provided with two shafts, connected so as to be integrally rotated in the bent form through a jointing part at the bent position of the lever, and is composed such that the operation knob is attached to the tip part of the first shaft out of the two shafts, and a switch body for executing a switch operation according to the rotation of the base end part of the second shaft is mounted to a body.

The present invention seeks to provide for a lever switch device having advantages over known such devices.

According to an aspect of the present invention, there is provided a lever switch device, comprising: a lever main body comprising an insert hole communicating from a tip end portion to a terminal end portion and a first opening provided on a side surface so as to at least partially communicate with the insert hole between the tip end portion and the terminal end portion, the lever main body being rotatably supported by a body around a predetermined rotation center axis; and a first remote shaft rotatably arranged through the first opening of the lever main body, and comprising a first operating knob at one end portion and a first operation portion at another end portion for operating an operational object by a rotational operation of the first operating knob; and characterized in that: the first operating knob comprises a second opening in the form of a through-hole for inserting the tip end portion of the lever main body and a first remote shaft supporting portion radially protruding from an inner wall of the second opening such that the first remote shaft is rotatably supported with respect to the lever main body by the first remote shaft supporting portion.

According to the invention, it is possible to provide a lever switch device in that the attachment property is good and, furthermore, it is possible to reduce the number of components.

The present invention will be explained in more detail, by way of example only, in conjunction with appended drawings, wherein:
**FIG.1** is an exploded perspective view showing a lever unit of a lever switch device in a preferred embodiment of the present invention;
**FIG.2** is a schematic view showing a first operating knob in the embodiment of the invention when viewed from a direction A of **FIG.1****;**
**FIG.3** is a cross sectional view showing the lever switch device in embodiment of the invention taken on line B-B of **FIG.1****;** and
**FIG.4** is a cross sectional view showing a lever main body including a rotation axis D in the embodiment of the invention taken on line G-G of **FIG.3****.**

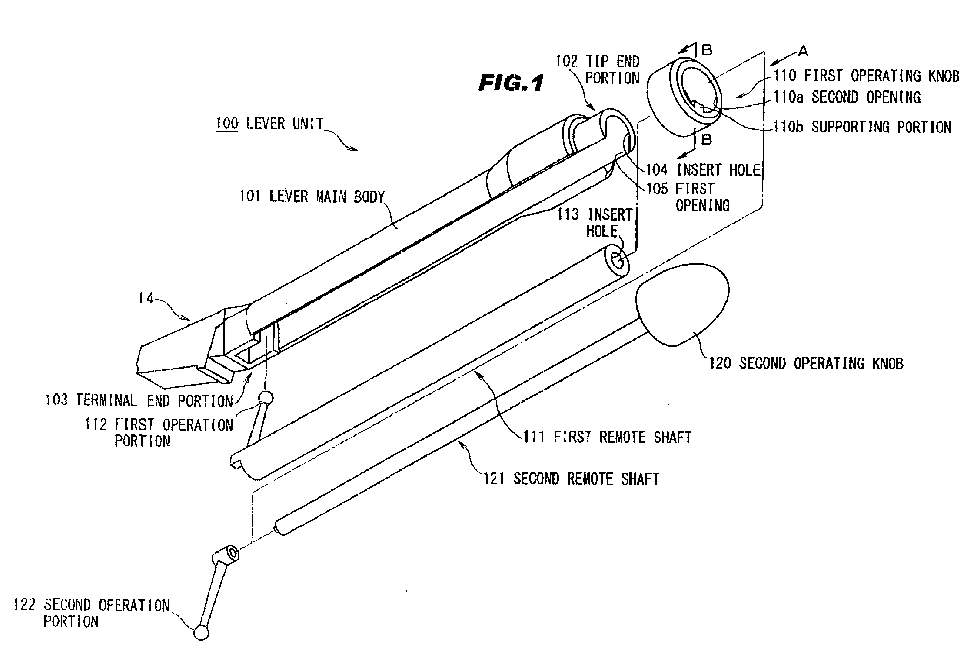

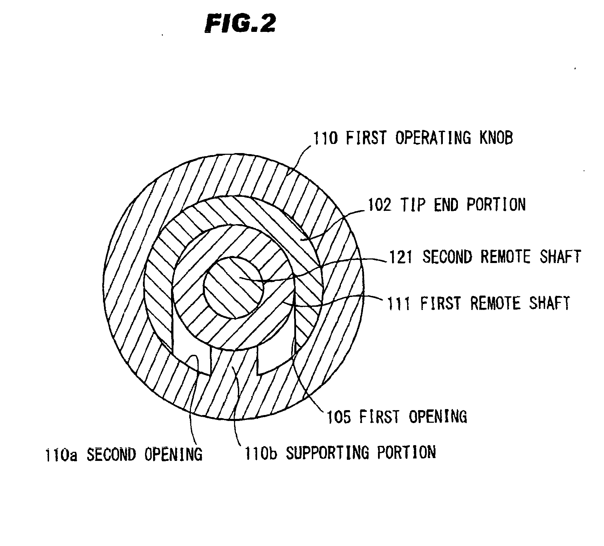

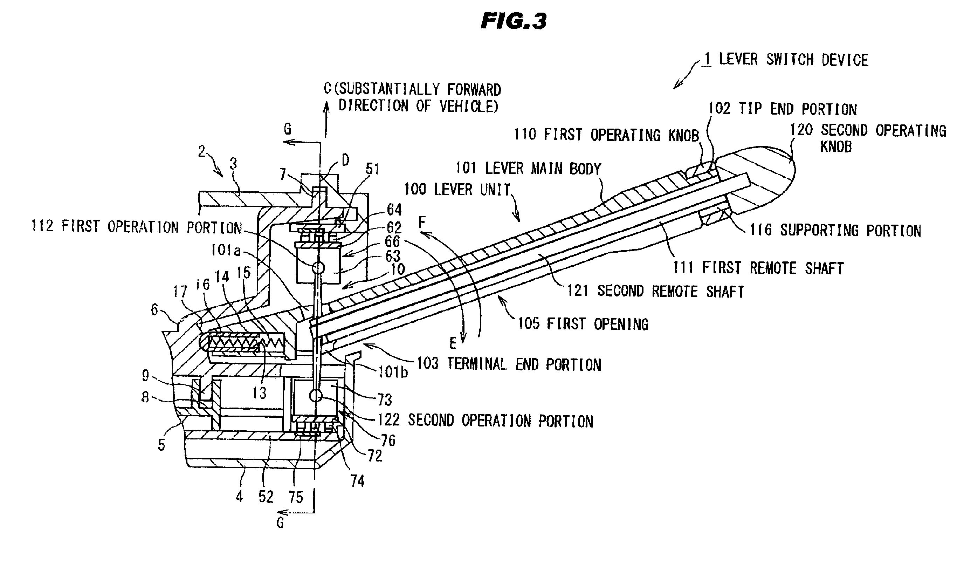

**FIG.1** is an exploded perspective view showing a lever unit of a lever switch device in a preferred embodiment of the present invention, **FIG.2** is a schematic view showing a first operating knob in the embodiment of the invention when viewed from a direction A of **FIG.1****,** and **FIG.3** is a cross sectional view showing the lever switch device in embodiment of the invention taken on line B-B of **FIG.1****.** It will be explained that a lever switch device **1** of the invention is provided at a peripheral portion of a steering column of a non-illustrated vehicle. In addition, a direction C in **FIG.3** is a substantially forward direction of the vehicle, hence, **FIG.1** is a cross sectional view showing a lever switch device when viewed from a substantially upward direction of the vehicle. In addition, in the embodiment of the invention, it will be explained that two remote shafts, which are first and second remote shafts **111** and **121,** are inserted into a lever main body **101,** however, the lever switch device **1** may be configured by one remote shaft.

The lever switch device **1** is schematically configured to include a body **2** provided with below-described first and second switches **66** and **67,** and a lever unit **100** rotatably provided with respect to the body **2.**

A body **1** includes a front case **3** and a back case **4,** and an outer shell of the body **2** is composed of the front case **3** and the back case **4.** A middle case **5** and substrates **51** and **52** are provided between the from case **3** and the back case **4.** A bracket **6** is rotatably provided around a stem portion **7** between the front case **3** and the middle case **5.**

A rotation direction of the bracket **6** is a direction about the rotation axis D of a lever unit **100** around the stem portion **7.** For guiding a rotation of the bracket **6,** a groove **8** is formed on an upper side of the middle case **5** in **FIG.3** and a convex portion **9** which is slidingly movable in the groove **8** is formed in the bracket 6. The groove **8** is a groove in a circular arc shape concentric with the stem portion **7,** even though it is not illustrated.

In addition, a hollow portion **10** is formed on a right side of the bracket 6 in **FIG.3****,** and a terminal end portion **103** of the lever unit **100** is inserted into the hollow portion **10.**

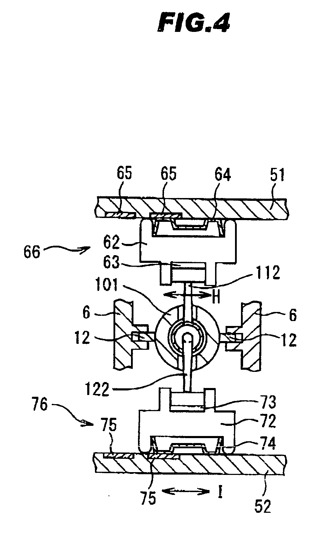

**FIG.4** is a cross sectional view showing a lever main body including a rotation axis D in the embodiment of the invention taken on line G-G of **FIG.3****.**

The lever unit **100** is rotataby provided around a stem portion **12** shown in **FIG.4****.** Rotation directions of the lever unit **100** around the stem portion **12** are an arrow E direction (rear) and an arrow F direction (forward) opposite thereto as shown in **FIG.3****.**

In addition, a projecting portion **14** having a hole **13** is formed at the terminal end portion **103** of the lever unit **100.** A spring **15** and a moderation piece **16** are housed in the hole **13.** On the other hand, a moderation wall **17** having three roots is formed in an inner part of the hollow portion **10** in the bracket **6.** In the state of **FIG.3****,** the moderation piece **16** of the lever unit **100** is fitted with a middle root of the moderation wall **17** by a biasing force of the spring **15.**

The lever unit **100** is composed of, e.g., a lever main body **101** having a cylindrical hollow section, a first remote shaft **111** integrally rotating with a first operating knob **110,** a first operation portion **112** formed on the first remote shaft **111** on an opposite side of the first operating knob **110,** a second remote shaft **121** integrally rotating with a second operating knob **120** and a second operation portion **122** formed on the second remote shaft **121** on an opposite side of the second operating knob **120.** The lever unit **100** is a portion supported to be rotatable with respect to the body **2,** and may include the above described moderation piece **16,** etc.

The lever main body **101** is schematically configured to include a tip end portion **102** inserted into a second opening **110a** of the first operating knob **110,** a terminal end portion **103** provided with a notch **101a** through which the first operation portion **112** is protruded, an insert hole **104** for inserting the first remote shaft **111,** and a first opening **105** provided on a side surface so as to communicate with the insert hole **104** from the tip end portion **102** to the terminal end portion **103.**

Although the first opening **105** is formed extending from the tip end portion **102** to the terminal end portion **103,** it is not limited thereto, and the first opening **105** may be partially provided between the tip end portion **102** and the terminal end portion **103.**
In the lever main body **101,** the first remote shaft **111** is incorporated rotatably, the first operating knob **110** is mounted on one end portion of the first remote shaft **111** and the first operation portion **112** is attached to another end portion so as to protrude from a notch **101a** of the lever main body **101** in an upward direction of **FIG.1****.**

The first remote shaft **111** has an insert hole **113** therein and the second remote shaft **121** is rotatably arranged having a coaxial structure (concentrically arranged) in the insert hole **113.** And then, the second operating knob **120** is mounted on one end portion of the second remote shaft **121** and the second operation portion **122** is attached to another end portion so as to protrude from a notch **101b** of the lever main body **101** in a downward direction **of** **FIG.3****.**

As shown in **FIG.3** and **FIG.4****,** the first operation portion **112** and the second operation portion **122** are arranged on the rotation axis D of the lever main body **101** (the lever unit **100)** in **FIG.3****.** The each tip end portion of the first operation portion **112** and the second operation portion **122** has only to be arranged at least on the rotation axis D of the lever main body **101.**

As shown in **FIG.1****,** the first operating knob **110** is schematically configured to include the second opening **110**a for inserting the tip end portion **102** of the lever main body **101,** and a supporting portion (first remote shaft supporting portion) **110**b protruding from an inner wall of the second opening **110**a toward the center thereof.

The first operating knob **110** is configured such that, as shown in **FIG.2****,** it is possible to rotatably support the first remote shaft **111** in the insert hole **104** of the tip end portion **102** by the supporting portion **110**b when the first remote shaft **111** is inserted into the first opening **105** of the lever main body **101** and the tip end portion **102** is inserted into the second opening **110**a.

As shown in **FIG.2****,** since the supporting portion **110**b is formed having a width narrower than that of the first opening **105** in a shorter direction thereof, the rotation is allowed in the arrow E direction and the arrow F direction of the first opening **105** as shown in **FIG.3****.**

Conventionally, when a lever having a structure similarly to the lever unit **100** is attached, it is necessary to attach the lever from an arrow A direction of **FIG.1****,** hence, the attachment property is not good.

However, since the lever main body **101** in the embodiment has the first opening **105** on the side surface thereof, it is possible to insert the first remote shaft **111** from the first opening **105,** hence, the attachment property is good.

In addition, since it is possible to rotatably support the first remote shaft **111** on the lever main body **101** by the supporting portion **110**b**,** it is possible to reduce components for supporting the first remote shaft **111** and the second remote shaft **121** inserted into the insert hole **113** of the first remote shaft **111,** hence, reduction of the components.

A contact holder **62** is assembled in the front case **3,** i.e. on a lower side of the substrate **51** attached to the body **2** side in **FIG.3****,** to be movable in a vertical direction (a direction orthogonal to the paper surface of **FIG.3**)**.** A fitting concave portion **63** is formed on a lower part of the contact holder **62** in **FIG.3** and **FIG.4****,** and the first operation portion **112** is fitted with the fitting concave portion **63.** In the case of this configuration, the first operation portion **112** is rotationally operated when rotationally operating the first operating knob **110,** and as shown in **FIG.4****,** the contact holder **62** reciprocates in a direction indicated by an arrow H.

In addition, a movable contact **64** is supported by the contact holder **62** on the substrate **51** side. On the other hand, a fixed contact **65** is provided on the substrate **51,** and the movable contact **64** carries out a switching operation by contacting with and separating from the fixed contact **65** according to the movement of the contact holder **62.** The movable contact **64** and the fixed contact **65** compose a first switch **66** provided on the body 2 side. The first switch 66 functions as, e.g., a light control switch for controlling turn-on/turn-off of a non-illustrated small lamp, etc.

Meanwhile, a contact holder **72** is assembled in the back case **4,** i.e. on a upper side of the substrate **52** attached to the body **2** side in **FIG.3****,** to be movable in a vertical direction (a direction orthogonal to the paper surface of **FIG.3**)**.** A fitting concave portion **73** is formed on an upper part of the contact holder **72,** and the second operation portion **122** is fitted with the fitting concave portion **73.** In the case of this configuration, the second operation portion **122** is rotationally operated when rotationally operating the second operating knob **120,** and as shown in **FIG.4****,** the contact holder **72** reciprocates in a direction indicated by an arrow I.

In addition, a movable contact **74** is supported by the contact holder **72** on the substrate **52** side. On the other hand, a fixed contact **75** is provided on the substrate **52,** and the movable contact **74** carries out a switching operation by contacting with and separating from the fixed contact **75** according to the movement of the contact holder **72.** The movable contact **74** and the fixed contact **75** compose a second switch **76** provided on the body **2** side. The second switch **76** functions as, e.g., a light control switch for controlling turn-on/turn-off of a non-illustrated headlamp, etc.

Operations in the embodiment will be explained in more detail hereinafter in conjunction with each drawing. Firstly, switching operation by the first and second operating knobs **112** and **120** will be explained.

When the first operating knob **110** is rotationally operated, the first remote shaft **111** and the first operation portion **112** rotate integrally, the contact holder **62** is reciprocated by the first operation portion **112,** and it is thereby possible to carry out the switching operation of the first switch **66.** Also, when the second operating knob **120** is rotationally operated, the second remote shaft **121** and the second operation portion **122** rotate integrally, the contact holder **72** is reciprocated by the second operation portion **122,** and it is thereby possible to carry out the switching operation of the second switch **76.**

In addition, a third switch for carrying out a switching operation according to the rotation of the bracket **6,** and fourth and fifth switches for carrying out switching operations according to the rotation of the lever unit **100** in the arrow E and F directions in **FIG.3** are provided inside the body **2,** even though none of them are illustrated. The third switch functions as, e.g., a switch for controlling a turn signal, the fourth switch functions as, e.g., a switch for carrying out a dimmer control of a headlamp and the fifth switch functions as, e.g., a switch for controlling passing.

When the lever main body **101** is rotationally operated about the rotation axis D around the stem portion **7** shown in **FIG.3****,** the lever main body **101** is rotationally moved with the bracket **6** around the stem portion **7** of the bracket **6.** As a result, the non-illustrated third switch is operated and switch control of the turn signal is carried out. As for the rotational operation of the lever main body **101,** moderation feeling is also imparted by a well-known moderation mechanism which is not illustrated.

Meanwhile, when the lever main body **101** is rotationally operated in a direction indicated by the arrow E (rear) in **FIG.3****,** the lever main body **101** rotates in the arrow E direction around the stem portion **12** shown in **FIG.4****.** As a result, the non-illustrated fourth switch is operated and the dimmer control of the headlamp is carried out. At this time, the moderation piece **16** crosses over a crest on an upper side in **FIG.3** from the middle root in the moderation wall **17** while compressing the spring **15,** and is engaged with a root on its upper side. The moderation feeling is imparted to the operation of the lever main body **101** in the arrow E direction by this movement.

Meanwhile, when the lever main body **101** is rotationally operated in a direction indicated by the arrow F (forward), the lever main body **101** rotates in the arrow F direction around the stem portion **12** shown in **FIG.4****.** As a result, the non-illustrated fifth switch is operated and the passing control is carried out. At this time, the moderation piece **16** moves to a lower crest in **FIG.3** from the middle root in the moderation wall **17** while compressing the spring **15,** and by the resistance thereof, the moderation feeling is imparted to the rotational operation of the lever main body **101** in a forward direction.

In case of this configuration, when the operation by a user is released at the moment that the moderation feeling is imparted, the lever main body **101** automatically returns as the moderation piece **16** is restored to the original root by the spring **15.** On the other hand, after operating the aforementioned lever main body **101** backwards, the moderation piece **16** returns to the original root from the upper root in **FIG.3** crossing over the lower crest by manually returning the lever main body **101.**
**(1)** According to the lever switch device **1** in the embodiment of the invention, since the first opening **105** is provided in the lever main body **101,** it is possible to easily attach the first remote shaft **111** to the lever main body **101** and to improve the attachment property.
**(2)** According to the lever switch device 1 in the embodiment of the invention, since it is possible to rotatably support the first remote shaft **111** in the lever main body **101** by the supporting portion **110**b of the first operating knob **110,** it is possible to reduce the number of components, thereby reducing the cost.
**(3)** According to the lever switch device **1** in the embodiment of the invention, although the first remote shaft **111** and the second remote shaft **121** are rotatably arranged in the lever main body **101** having a coaxial structure, a remote shaft arranged in the lever main body 101 having the coaxial structure may be only the first remote shaft **111,** or may be three or more remote shafts. In other words, by the rotational operations of three or more operating knobs, it is possible to drive three or more remote shafts and operation portions each corresponding thereto, and it is also possible to operate three or more switches by three or more operating knobs.

It should be noted that the present invention is not intended to be limited to the above-mentioned embodiment, and the various kinds of changes thereof can be implemented by those skilled in the art without departing from or without modifying the technical idea of the present invention.

Although the invention has been described with respect to the specific embodiments for complete and clear disclosure, the appended claims are not to be therefore limited but are to be construed as embodying all modifications and alternative constructions that may occur to one skilled in the art which fairly fall within the basic teaching herein set forth.

## Claims

1. A lever switch device (1), comprising:
a lever main body (101) comprising an insert hole (104) communicating from a tip end portion (102) to a terminal end portion (103) and a first opening (105) provided on a side surface so as to at least partially communicate with the insert hole between the tip end portion and the terminal end portion, the lever main body being rotatably supported by a body around a predetermined rotation center axis; and
a first remote shaft (111) rotatably arranged through the first opening of the lever main body, and comprising a first operating knob (110) at one end portion and a first operation portion (112) at another end portion for operating an operational object by a rotational operation of the first operating knob; and **characterized in that**:
the first operating knob comprises a second opening (110a) in the form of a through-hole for inserting the tip end portion of the lever main body and a first remote shaft supporting portion (110b) radially protruding from an inner wall of the second opening such that the first remote shaft is rotatably supported with respect to the lever main body by the first remote shaft supporting portion.

2. The lever switch device (1) according to claim **1,** wherein the lever main body (101) comprises a tip end portion (102) inserted into the second opening (110a) of the first operating knob, a terminal end portion (103) provided with a notch (101a) through which the first operation portion (112) is protruded, an insert hole (104) for inserting the first remote shaft (111), and the first opening (105) provided on a side surface so as to communicate with the insert hole (104) from the tip end portion to the terminal end portion.

3. The lever switch device (1) according to claim **1,** wherein first remote shaft (111) is rotatably incorporated in the lever main body (101);
the first operating knob (110) is mounted at an end portion of the first remote shaft; and
the first operation portion (112) is attached in a protruding condition at another end portion of the first remote shaft.

4. The lever switch device (1) according to claim **1,** wherein, when the first remote shaft (111) is inserted into the first opening (105) of the lever main body (101) and the tip end portion (102) is inserted into the second opening (110a), the first remote shaft supporting portion (110b) rotatably supports the first remote shaft in the insert hole of the tip end portion.

5. The lever switch device (1) according to claim **1,** further comprising:
a second remote shaft (121) rotatably arranged in the insert hole (104) of the lever main body (101) having a coaxial structure with the first remote shaft (111), and comprising a second operating knob (120) at one end portion and a second operation portion (122) at another end portion for operating an operational object by a rotational operation of the second operating knob.

6. The lever switch device (1) according to claim **5,** wherein a lever unit (100) comprises the lever main body (101) having a cylindrical hollow sectional shape, the first remote shaft (111) integrally rotating with the first operating knob (110), the first operation portion (112) formed on the first remote shaft on the opposite side of the first operating knob, the second remote shaft (121) integrally rotating with the second operating knob (120), and the second operation portion (122) formed on the second remote shaft on the opposite side of the second operating knob.

7. The lever switch device (1) according to claim **5,** wherein the first remote shaft (111) comprises an insert hole (113); and
the second remote shaft (121) is rotatably arranged in the insert hole having a coaxial structure.

8. The lever switch device (1) according to claim **5,** wherein the second operating knob (120) is mounted at an end portion of the second remote shaft (121); and
the second operation portion (122) is attached in a protruding condition at another end portion of the second remote shaft.

9. The lever switch device (1) according to claim **5,** wherein the first and second operation portions (112, 122) are arranged on a rotation axis of the lever main body (101); and
each tip end portion of the first and second operation portions is arranged at least on the rotation axis of the lever main body.

## Patentansprüche

1. Hebelschaltervorrichtung (1), die Folgendes umfasst:
einen Hebelhauptkörper (101), der ein Einsetzloch (104), das von einem Spitzenendteil (102) zu einem Abschlussendteil (103) kommuniziert und eine erste Öffnung (105) aufweist, die an einer Seitenfläche so vorgesehen ist, um wenigstens teilweise mit dem Einsetzloch zwischen dem Spitzenendteil und dem Abschlussendteil zu kommunizieren, wobei der Hebelhauptkörper durch einen Körper um eine vorbestimmte Drehmittelachse drehbar abgestützt wird; und
eine erste entfernte Welle (111), die drehbar durch die erste Öffnung des Hebelhauptkörpers angeordnet ist, und einen ersten Betätigungsknopf (110) an einem Endteil und einen ersten Betätigungsteil (112) an einem anderen Endteil zum Betätigen eines Betätigungsobjekts durch einen Drehvorgang des ersten Betätigungsknopfes aufweist; und **dadurch gekennzeichnet, dass**
der erste Betätigungsknopf eine zweite Öffnung (110a) in Form eines Durchgangslochs zum Einführen des Spitzenendteils des Hebelhauptkörpers und einen die erste entfernte Welle abstützenden Teil (110b) aufweist, der aus einer Innenwand der zweiten Öffnung radial so vorsteht, dass die erste entfernte Welle durch den die erste entfernte Welle abstützenden Teil in Bezug zu dem Hebelhauptkörper drehbar abgestützt wird.

2. Hebelschaltervorrichtung (1) nach Anspruch 1, bei der der Hebelhauptkörper (101) einen Spitzenendteil (102), der in die zweite Öffnung (110a) des ersten Betätigungsknopfes eingeführt wird, einen Abschlussendteil (103), der mit einer Kerbe (101a) versehen ist, durch die der erste Betätigungsteil (112) vorsteht, ein Einsetzloch (104) zum Einsetzen der ersten entfernten Welle (111), und die erste Öffnung (105) aufweist, die an einer Seitenfläche so vorgesehen ist, um mit dem Einsetzloch (104) von dem Spitzenendteil zu dem Abschlussendteil zu kommunizieren.

3. Hebelschaltervorrichtung (1) nach Anspruch 1, bei der die erste entfernte Welle (111) drehbar in den Hebelhauptkörper (101) eingebaut ist;
der erste Betätigungsknopf (110) an einem Endteil der ersten entfernten Welle angebracht ist; und
der erste Betätigungsteil (112) in einem vorstehenden Zustand an einem anderen Endteil der ersten entfernten Welle befestigt ist.

4. Hebelschaltervorrichtung (1) nach Anspruch 1, bei der, wenn die erste entfernte Welle (111) in die erste Öffnung (105) des Hebelhauptkörpers (101) eingeführt wird und der Spitzenendteil (102) in die zweite Öffnung (110a) eingeführt wird, der die erste entfernte Welle abstützende Teil (110b) die erste entfernte Welle in dem Einsetzloch des Spitzenendteils drehbar abstützt.

5. Hebelschaltervorrichtung (1) nach Anspruch 1, die weiter Folgendes umfasst:
eine zweite entfernte Welle (121), die drehbar in dem Einsetzloch (104) des Hebelhauptkörpers (101) angeordnet ist und eine koaxiale Struktur mit der ersten entfernten Welle (111) aufweist, und einen zweiten Betätigungsknopf (120) an einem Endteil und einen zweiten Betätigungsteil (122) an dem anderen Endteil zum Betätigen eines Betätigungsobjekts durch einen Drehvorgang des zweiten Betätigungsknopfes aufweist.

6. Hebelschaltervorrichtung (1) nach Anspruch 5, bei der eine Hebeleinheit (100) den Hebelhauptkörper (101) mit einer zylindrischen hohlen Schnittform aufweist, die erste entfernte Welle (111) integriert mit dem ersten Betätigungsknopf (110) rotiert, der erste Betätigungsteil (112) an der ersten entfernten Welle auf der gegenüberliegenden Seite des ersten Betätigungsknopfes ausgebildet ist, die zweite entfernte Welle (121) integriert mit dem zweiten Betätigungsknopf (120) rotiert, und der zweite Betätigungsteil (122) auf der zweiten entfernten Welle auf der gegenüberliegenden Seite des zweiten Betätigungsknopfes ausgebildet ist.

7. Hebelschaltervorrichtung (1) nach Anspruch 5, bei der die erste entfernte Welle (111) ein Einsetzloch (113) aufweist; und
die zweite entfernte Welle (121) drehbar in dem Einsetzloch angeordnet ist, das eine koaxiale Struktur hat.

8. Hebelschaltervorrichtung (1) nach Anspruch 5, bei der der zweite Betätigungsknopf (120) an einem Endteil der zweiten entfernen Welle (121) angebracht ist; und
der zweite Betätigungsteil (122) in einem vorstehenden Zustand an dem anderen Endteil der zweiten entfernen Welle befestigt ist.

9. Hebelschaltervorrichtung (1) nach Anspruch 5, bei der der erste und zweite Betätigungsteil (112, 122) an einer Drehachse des Hebelhauptkörpers (101) angeordnet sind; und
jeder Spitzenendteil des ersten und zweiten Betätigungsteils wenigstens an der Drehachse des Hebelhauptkörpers angeordnet ist.

## Revendications

1. Dispositif à commutateur à levier (1) comportant :
un corps principal de levier (101) comportant un trou d'insertion (104) communiquant depuis une partie d'extrémité de bout (102) jusqu'à une partie d'extrémité terminale (103) et une première ouverture (105) mise en oeuvre sur une surface latérale de sorte à communiquer au moins partiellement avec le trou d'insertion entre la partie d'extrémité de bout et la partie d'extrémité terminale, le corps principal de levier étant supporté de manière rotative par un corps autour d'un axe central de rotation prédéterminé ; et
un premier arbre distant (111) arrangé de manière rotative au travers de la première ouverture du corps principal de levier, et comportant un premier bouton de fonctionnement (110) au niveau d'une partie d'extrémité et une première partie de fonctionnement (112) au niveau d'une autre partie d'extrémité à des fins de fonctionnement d'un objet en état de fonctionnement par un fonctionnement rotationnel du premier bouton de fonctionnement ; et **caractérisé en ce que** :
le premier bouton de fonctionnement comporte une deuxième ouverture (110a) sous la forme d'un trou débouchant à des fins d'insertion de la partie d'extrémité de bout du corps principal de levier et une partie de support (110b) du premier arbre distant faisant saillie dans le sens radial depuis une paroi intérieure de la deuxième ouverture de sorte que le premier arbre distant est supporté de manière rotative par rapport au corps principal de levier par la partie de support du premier arbre distant.

2. Dispositif à commutateur à levier (1) selon la revendication 1, dans lequel le corps principal de levier (101) comporte une partie d'extrémité de bout (102) insérée dans la deuxième ouverture (110a) du premier bouton de fonctionnement, une partie d'extrémité terminale (103) munie d'une entaille (101a) au travers de laquelle la première partie de fonctionnement (112) est mise en saillie, un trou d'insertion (104) à des fins d'insertion du premier arbre distant (111), et la première ouverture (105) mise en oeuvre sur une surface latérale de manière à communiquer avec le trou d'insertion (104) depuis la partie d'extrémité de bout jusqu'à la partie d'extrémité terminale.

3. Dispositif à commutateur à levier (1) selon la revendication 1, dans lequel le premier arbre distant (111) est incorporé de manière rotative dans le corps principal de levier (101) ;
le premier bouton de fonctionnement (110) est monté sur une partie d'extrémité du premier arbre distant ; et
la première partie de fonctionnement (112) est attachée selon un état faisant saillie au niveau d'une autre partie d'extrémité du premier arbre distant.

4. Dispositif à commutateur à levier (1) selon la revendication 1, dans lequel, quand le premier arbre distant (111) est inséré dans la première ouverture (105) du corps principal de levier (101) et quand la partie d'extrémité de bout (102) est insérée dans la deuxième ouverture (110a), la partie de support (110b) du premier arbre distant supporte de manière rotative le premier arbre distant dans le trou d'insertion de la partie d'extrémité de bout.

5. Dispositif à commutateur à levier (1) selon la revendication 1, comportant par ailleurs :
un deuxième arbre distant (121) arrangé de manière rotative dans le trou d'insertion (104) du corps principal de levier (101) ayant une structure coaxiale par rapport au premier arbre distant (111), et comportant un deuxième bouton de fonctionnement (120) au niveau d'une partie d'extrémité et une deuxième partie de fonctionnement (122) au niveau d'une autre partie d'extrémité à des fins de fonctionnement d'un objet en état de fonctionnement par un fonctionnement rotationnel du deuxième bouton de fonctionnement.

6. Dispositif à commutateur à levier (1) selon la revendication 5, dans lequel une unité de levier (100) comporte le corps principal de levier (101) ayant une forme à section creuse cylindrique, le premier arbre distant (111) se mettant intégralement en rotation avec le premier bouton de fonctionnement (110), la première partie de fonctionnement (112) formée sur le premier arbre distant du côté opposé au premier bouton de fonctionnement, le deuxième arbre distant (121) se mettant intégralement en rotation avec le deuxième bouton de fonctionnement (120), et la deuxième partie de fonctionnement (122) formée sur le deuxième arbre distant du côté opposé au deuxième bouton de fonctionnement.

7. Dispositif à commutateur à levier (1) selon la revendication 5, dans lequel le premier arbre distant (111) comporte un trou d'insertion (113) ; et
le deuxième arbre distant (121) est arrangé de manière rotative dans le trou d'insertion ayant une structure coaxiale.

8. Dispositif à commutateur à levier (1) selon la revendication 5, dans lequel le deuxième bouton de fonctionnement (120) est monté au niveau d'une partie d'extrémité du deuxième arbre distant (121) ; et
la deuxième partie de fonctionnement (122) est attachée selon un état faisant saillie au niveau d'une autre partie d'extrémité du deuxième arbre distant.

9. Dispositif à commutateur à levier (1) selon la revendication 5, dans lequel les première et deuxième parties fonctionnelles (112, 122) sont arrangées sur un axe de rotation du corps principal de levier (101) ; et
chaque partie d'extrémité de bout des première et deuxième parties fonctionnelles est arrangée au moins sur l'axe de rotation du corps principal de levier.
